Europäisches Patentamt

European Patent Office

Office européen des brevets

(11) Veröffentlichungsnummer: **0 320 687**
**A1**

## (12) EUROPÄISCHE PATENTANMELDUNG

(21) Anmeldenummer: 88119830.3

(22) Anmeldetag: 28.11.88

(51) Int. Cl.⁴: **G11B 5/31 , G11B 5/09**

(30) Priorität: 11.12.87 DE 3742136

(43) Veröffentlichungstag der Anmeldung:
21.06.89 Patentblatt 89/25

(84) Benannte Vertragsstaaten:
AT CH DE FR GB IT LI NL

(71) Anmelder: Siemens Aktiengesellschaft Berlin
und München
Wittelsbacherplatz 2
D-8000 München 2(DE)

(72) Erfinder: Schewe, Herbert, Dr.
Haydnstrasse 58
D-8522 Herzogennaurach(DE)
Erfinder: Stephani, Dietrich, Dr.
Hans-Birkmayr-Strasse 5
D-8526 Bubenreuth(DE)

(54) **Dünnfilm-Magnetkopf zur vertikalen Magnetisierung.**

(57) Der Dünnfilm-Magnetkopf ist über ein senkrecht zu magnetisierendes Aufzeichnungsmedium zu führen, in das längs einer Spur Flußwechsel mit vorbestimmter Aufzeichnungswellenlänge und Flußwechseldichte einzuschreiben sind. Er enthält einen den magnetischen Fluß führenden, ringkopfähnlichen Leitkörper mit zwei Magnetschenkeln, die Magnetpole ausbilden, welche hintereinander und durch einen Spalt vorbestimmter Weite getrennt angeordnet sind sowie vorbestimmte Ausdehnungen in Bewegungsrichtung haben. Bei diesem Magnetkopf soll der Aufwand zur Signalverarbeitung in einem Schreib-Lesekanal verringert werden. Gemäß der Erfindung erfüllt hierzu der Magnetkopf die folgende Beziehung zumindest annähernd:

$\lambda^* = g + \mathrm{Max}(A_1, A_2)$. Dabei sind $\lambda^*$ die Aufzeichnungswellenlänge, die sich für den Wert $D_p$ der Flußwechseldichte (D) ergibt, bei dem die Lesespannung (V) des Magnetkopfes (2) maximal ist, g die Weite des Spaltes (12) und $\mathrm{Max}(A_1, A_2)$ der größere Wert der beiden Ausdehnungen $(A_1, A_2)$ der Magnetpole (P1, P2).

FIG 1

## Dünnfilm-Magnetkopf zur vertikalen Magnetisierung

Die Erfindung bezieht sich auf einen Dünnfilm-Magnetkopf, der über ein senkrecht zu magnetisierendes Aufzeichnungsmedium zu führen ist, in das längs einer Spur Flußwechsel mit vorbestimmter Aufzeichnungswellenlänge und Flußwechseldichte einzuschreiben sind, und der einen den magnetischen Fluß führenden, ringkopfähnlichen Leitkörper mit zwei Magnetschenkeln enthält. Diese Magnetschenkel bilden dem Aufzeichnungsmedium zugewandte Magnetpole aus, welche in relativer Bewegungsrichtung des Magnetkopfes bezüglich des Aufzeichnungsmediums gesehen hintereinander, durch einen Spalt vorbestimmter Weite beabstandet angeordnet sind und vorbestimmte Ausdehnungen in Bewegungsrichtung haben, und begrenzen außerhalb des Bereichs der Magnetpole einen Zwischenraum, durch den sich die Windungen mindestens einer Schreib- und/oder Lesespulenwicklung erstrecken. Ein entsprechender Magnetkopf geht z.B. aus der EP-A-0 012 912 hervor.

Das Prinzip einer senkrechten Magnetisierung zur Speicherung von Daten in entsprechenden Aufzeichnungsmedien ist allgemein bekannt (vgl. z.B. "IEEE Transactions on Magnetics", Vol. MAG-16, No. 1, Jan. 1980, Seiten 71 bis 76, oder Vol. MAG-20, No. 5, Sept. 1984, Seiten 657 bis 662 und 675 bis 680). Die für dieses vielfach auch als vertikale Magnetisierung bzw. Datenspeicherung bezeichnete Prinzip vorzusehende Aufzeichnungsmedien können insbesondere in Form von starren Magnetspeicherplatten vorliegen. Ein derartiges Aufzeichnungsmedium weist mindestens eine entsprechend zu magnetisierende Speicherschicht vorbestimmter Dicke aus einem Material mit senkrechter magnetischer Anisotropie auf, wobei die Achse der sogenannten leichten Magnetisierung dieser Schicht senkrecht bezüglich der Oberflä che des Aufzeichnungsmediums ausgerichtet ist. Bevorzugt wird als entsprechendes Speichermaterial CoCr (vgl. z.B. "IEEE Transactions on Magnetics", Vol. MAG-14, No. 5, Sept. 1978, Seiten 849 bis 851). Mittels besonderer Magnetköpfe können dann längs einer Spur die einzelnen Informationen als Bits in aufeinanderfolgenden Abschnitten durch entsprechende Ummagnetisierung der Speicherschicht in Form von Flußwechseln eingeschrieben werden. Die Bits bzw. Flußwechsel haben dabei eine vorbestimmte, auch als Aufzeichnungswellenlänge bezeichnete Ausdehnung in Längsrichtung der Spur. Diese Ausdehnung kann bei einer vertikalen Magnetisierung wesentlich kleiner sein als bei einer Speicherung nach dem bekannten Prinzip einer longitudinalen (horizontalen) Magnetisierung, bei der einer Verringerung der Aufzeichnungswellenlänge durch die Magnetisierung des Materials Grenzen gesetzt sind. D.h., durch eine senkrechte Magnetisierung läßt sich die Datendichte gegenüber einer longitudinalen Magnetisierung vergrößern.

Führt man nun einen Dünnfilm-Magnetkopf der eingangs genannten Art längs einer Spur über ein Aufzeichnungsmedium, in das durch vertikale Magnetisierung magnetische Flußwechsel eingeschrieben sind, so ist mit diesem Kopf eine vorbestimmte Lesespannung zu erzeugen. Diese Lesespannung ist von der Anzahl der Flußwechsel pro Längeneinheit der Spur, d.h. von der Flußwechseldichte, abhängig. Eine entsprechende Kurve der Lesespannung in Abhängigkeit von dieser Flußwechseldichte in einem Diagramm wird auch als Roll-Off-Kurve bezeichnet. Es zeigt sich nun, daß bei bekannten Dünnfilm-Magnetköpfen diese Kurve für einen bestimmten Wert der Flußwechseldichte einen ausgeprägten Maximalwert $D_p$ annimmt und bei weiterer Erhöhung der Flußwechseldichte stark abfällt (vgl. z.B. "IEEE Transactions on Magnetics, Vol. MAG-23, No. 1, Jan. 1987, Seiten 177 bis 179). Dieser Abfall der Lesespannung läßt sich durch eine mit zunehmender Flußwechseldichte fortschreitende Überlagerung (Interferenz) der bipolaren Lesesignale erklären, welche man beim Lesen eines einzelnen Flußwechsels erhält.

Wegen dieser ausgeprägten Abhängigkeit der Lesespannung von der Flußwechseldichte, insbesondere im Bereich des Maximalwertes $D_p$, ist der Aufwand für eine Signalverarbeitung in einem Schreib-Lese-Kanal des Magnetkopfes der eingangs genannten Art entsprechend groß. Aufgabe der Erfindung ist es somit, diesen Aufwand zu verringern.

Diese Aufgabe wird erfindungsgemäß dadurch gelöst, daß bei einem Dünnfilm-Magnetkopf der eingangs genannten Art die folgende Beziehung zumindest annähernd erfüllt ist:

$$\lambda^* = g + \text{Max}(A_1, A_2),$$

wobei

$\lambda^*$ die Aufzeichnungswellenlänge ist, die sich für den Wert der Flußwechseldichte ergibt, bei dem die Lesespannung an der Lesespulenwicklung maximal ist,

$g$ die Weite des Spaltes ist

und

$\text{Max}(A_1, A_2)$ der größere Wert der beiden Ausdehnungen der Magnetpole ist.

Die mit einer entsprechenden Ausgestaltung des Magnetkopfes verbundenen Vorteile sind insbesondere darin zu sehen, daß seine Roll-Off-Kurve über einen großen Bereich der Flußwechseldichte einen sehr flachen Verlauf zeigt. Der Signalverarbeitungsaufwand ist dementsprechend begrenzt.

Vorteilhafte Ausgestaltungen des erfindungsgemäßen Dünnfilm-Magnetkopfes gehen aus den Unteransprüchen hervor.

Zur weiteren Erläuterung der Erfindung wird nachfolgend auf die schematische Zeichnung Bezug genommen, in deren Figur 1 ein Dünnfilm-Magnetkopf nach der Erfindung angedeutet ist. Figur 2 zeigt eine Roll-Off-Kurve für einen bekannten Dünnfilm-Magnet- kopf, dessen Spurbreiten aus Figur 3 hervorgehen. In Figur 4 ist die Roll-Off-Kurve für einen erfindungsgemäßen Magnetkopf dargestellt.

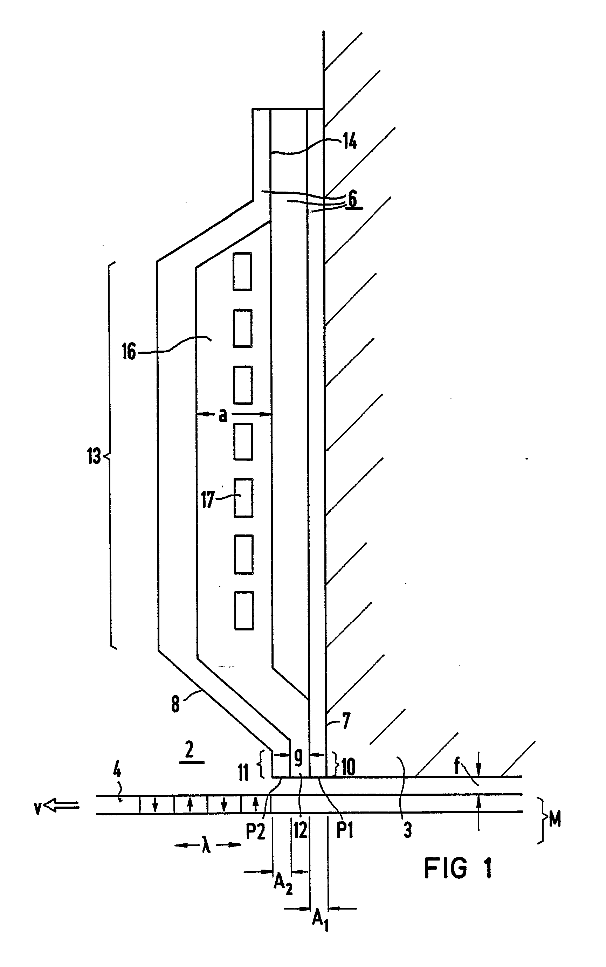

Bei dem in Figur 1 als Längsschnitt nur teilweise veranschaulichten Dünnfilm-Magnetkopf zum Schreiben und Lesen wird von an sich bekannten ringkopfähnlichen Ausführungsformen mit schichtweisem Aufbau für das Prinzip einer senkrechten (vertikalen) Magnetisierung ausgegangen (vgl. z.B. die genannte EP-A-0 012 912 oder die EP-A-0 166 818). Der in der Figur allgemein mit 2 bezeichnete Kopf ist in bekannter Dünnfilm-Technik auf der Flachseite eines Substrates 3 abgeschieden. Diese Flachseite bildet dabei z.B. die Rückseite eines gebräuchlichen, als Flugkörper bezeichneten Elementes, welches in der Figur nicht weiter ausgeführt ist. Der Magnetkopf 2 ist relativ zu einem an sich bekannten, vertikal zu magnetisierenden Aufzeichnungsmedium M in geringer Flughöhe f von beispielsweise weniger als 0,2 $\mu$m längs einer Spur aerodynamisch zu führen. Die bezüglich des Kopfes relative Bewegungsrichtung des sich beispielsweise unter diesem hinwegdrehenden Aufzeichnungsmediums ist durch eine mit v bezeichnete gepfeilte Linie angedeutet.

Das Aufzeichnungsmedium, insbesondere eine Magnetspeicherplatte, weist eine Speicherschicht 4 beispielsweise aus einer CoCr-Legierung auf, die gegebenenfalls auf ihrer dem Magnetkopf abgewandten Seite mit weiteren Schichten wie z.B. aus einer speziellen NiFe-Legierung verbunden sein kann. In der Figur sind einige in die Speicherschicht 4 längs einer Spur eingeschriebene Flußwechsel angedeutet, die in Bewegungsrichtung jeweils eine vorbestimmte Länge der Spur einnehmen. Diese einem Flußwechsel zuzuordnende Aufzeichnungswellenlänge ist mit $\lambda$ bezeichnet.

Der Magnetkopf 2 enthält einen den magnetischen Fluß führenden, ringkopfähnlichen Leitkörper 6 mit zwei Magnetschenkeln 7 und 8. Diese Schenkel sind weitgehend und insbesondere im Bereich ihrer dem Aufzeichnungsmedium M zugewandten Endstücke 10 und 11 zumindest annähernd senkrecht zur Oberfläche des Aufzeichnungsmediums ausgerichtet und bilden dort jeweils einen Magnetpol P1 bzw. P2. Die Ausdehnung der Endstücke 10 und 11 im Bereich dieser Pole P1 und P2 bezüglich der Bewegungsrichtung v ist dabei mit $A_1$ bzw. $A_2$ bezeichnet. Zumindest die Ausdehnung $A_1$ des

in Bewegungsrichtung v gesehen vorlaufenden Magnetpoles P1 kann dabei vorteilhaft zwischen 0,3 $\mu$m und 3 $\mu$m betragen. Die entsprechende Ausdehnung $A_2$ des Magnetpols P2 liegt dabei im allgemeinen in derselben Größenordnung, wobei $A_1$ und $A_2$ auch ungleiche Werte haben können. Zwischen den beiden Polen P1 und P2 ist ein Luftspalt 12 mit einer vorteilhaft geringen longitudinalen, d.h. in Bewegungsrichtung v weisenden Weite g von unter 1 $\mu$m, insbesondere unter 0,3 $\mu$m, ausgebildet. In einem mittleren Bereich 13 des ringkopfähnlichen Leitkörpers 6 ist der Abstand zwischen den beiden Magnetschenkeln 7 und 8 gegenüber dieser Spaltweite g erweitert, indem z.B. der hinsichtlich der Bewegungsrichtung v rückwärtige Magnetschenkel 8 in diesem Bereich auf einen größeren Abstand a bezüglich des vorderen, eben ausgebildeten und dem Substrat 3 zugewandten Magnetschenkels 7 führt. Außerhalb dieses Bereiches 13 ist auf der dem Aufzeichnungsmedium M abgewandten Seite des Leitkörpers 6 der Magnetschenkel 8 in bekannter Weise in einem Verbindungsbereich 14 an den Magnetschenkel 7 angefügt, so daß sich dann die ringkopfähnliche Gestalt des Leitkörpers 6 ergibt. Durch den zwischen den beiden Magnetschenkeln 7 und 8 in dem mittleren Bereich 13 somit vorhandenen Zwischenraum 16 erstreckt sich mindestens eine flache Spulenwicklung 17, die sowohl als Schreib- als auch als Lesespule dienen kann. Diese in der Figur nur angedeutete Spulenwicklung weist im allgemeinen eine oder mehrere Lagen mit einer verhältnismäßig großen Anzahl an Windungen auf.

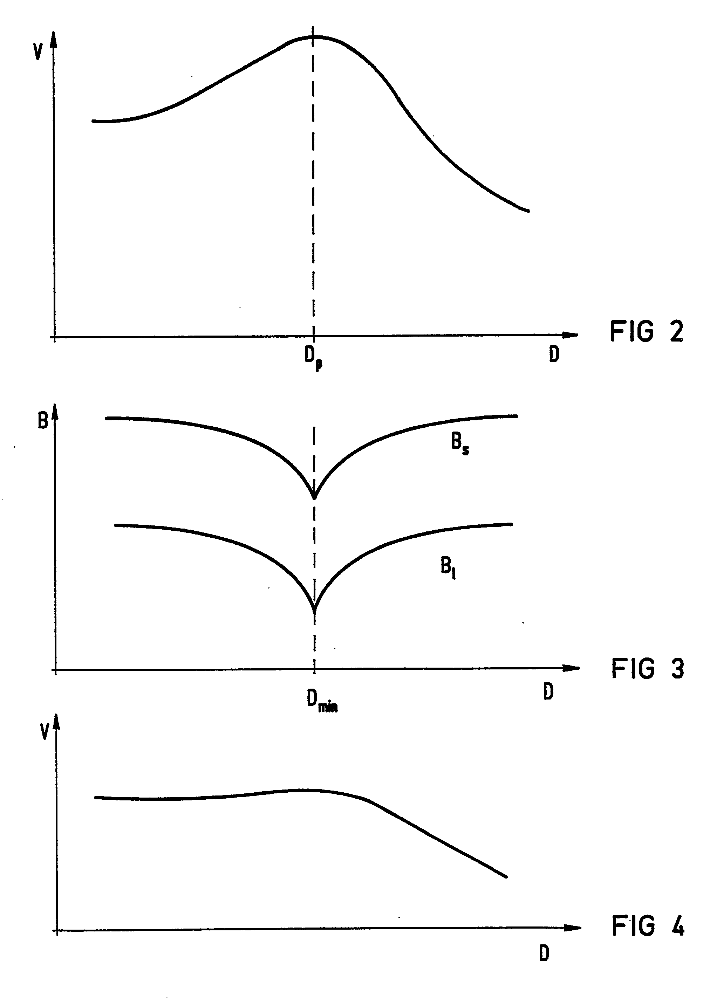

Geht man von entsprechenden bekannten ringkopfähnlichen Ausführungsformen von Dünnfilm-Magnetköpfen zur vertikalen Magnetisierung aus, so erhält man insbesondere im Falle von Aufzeichnungsmedien mit CoCr-Speicherschicht im allgemeinen eine Roll-Off-Kurve, wie sie in dem Diagramm der Figur 2 schematisch dargestellt ist. In diesem Diagramm sind auf der Ordinate die Lesespannung V und auf der Abszisse die Flußwechseldichte D in willkürlichen Einheiten aufgezeichnet. Die Kurve wird dadurch erhalten, daß man längs einer Spur Flußwechsel mit variierender Aufzeichnungswellenlänge schreibt und anschließend die dazugehörige Lesespannung mißt. Bei einem bestimmten Wert $D_p$ der Flußwechseldichte D zeigt sich dann ein unerwünschtes ausgeprägtes Maximum der Lesespannung V.

Mit der erfindungsgemäßen Bemessungsvorschrift ist nun zu erreichen, daß dieses Maximum der Lesespannung zumindest weitgehend eliminiert wird.

Hierbei wird von der Beobachtung ausgegangen, daß bei den bekannten Dünnfilm-Magnetköpfen mit ringkopfähnlicher Gestalt ihrer magnetischen Leitkörper die effektiven Spurbreiten sowohl bei der Lesefunktion als auch bei der Schreibfunktion ebenfalls von der Flußwechseldichte D abhängen. Diese Tatsache ist in dem Diagramm der Figur 3 schematisch wiedergegeben. Dabei sind auf der Abszisse die Flußwechseldichte D und auf der Ordinate die effektiven Spurbreiten B in willkürlichen Einheiten aufgetragen. Wie sich sowohl aus dem Verlauf der Kurve $B_L$ für die Lesebreite wie auch aus dem Verlauf der Kurve $B_s$ für die Schreibbreite ergibt, nehmen die effektiven Spurbreiten bei einem bestimmten Wert $D_{min}$ einen Minimalwert an. Dies besagt, daß Interferenzen auftreten. Eine maximale Auslöschung wird erreicht, wenn auf den dem Aufzeichnungsmedium M zugewandten Polflächen der Pole P1 und P2 Bereiche mit gleicher Phase und gleicher Amplitude im Magnetkopf zur Interferenz gebracht werden. In den Endstücken 10 und 11 des Magnetkopfes ist nämlich die Flußkonzentration nicht über den jeweiligen Querschnitt konstant; d.h., die Endstücke 10 und 11 weisen Bereiche mit unterschiedlicher Leseempfindlichkeit auf. Dies hat zur Folge, daß insbesondere die Interferenzbedingung hinsichtlich gleicher Phase und gleicher Amplitude überwiegend in den Randbereichen des Kopfes erfüllt ist und daß damit die wirksame Spurbreite entsprechend reduziert wird. Eine erste destruktive Interferenz, bei der die genannte Interferenzbedingung erfüllt ist, tritt bei der Flußwechseldichte $D_{min}$ gemäß Figur 3 auf, wenn die Aufzeichnungswellenlänge

$$\lambda = \lambda^* = g + Max(A_1, A_2)$$

beträgt. Bei Interferenzen höherer Ordnung können auch weiter innen, d.h. näher an dem Spaltbereich liegende Bereiche der Polendstücke mit hoher Leseempfindlichkeit zur Auslöschung beitragen und dabei die Spurbreite drastisch verkleinern.

Da die Lesespannung V direkt proportional zur Lesespurbreite ist, erhält man nun einen flachen Verlauf der Roll-Off-Kurve, wenn die Bedingung

$$D_p \approx D_{Min}$$

erfüllt ist. Diese Bedingung wird hingegen bei bekannten Dünn-film-Magnetköpfen nicht eingehalten.

Legt man die erwähnte Bedingung einem Magnetkopf nach der eingangs gekennzeichneten Art zugrunde, so ergibt sich dann ein Verlauf der Roll-Off-Kurve, wie er aus dem Diagramm der Figur 4 in Figur 2 entsprechend der Darstellung hervorgeht. D.h., gemäß der Erfindung wird aus dem experimentell zu ermittelnden Wert $D_p$ die Aufzeichnungswellenlänge $\lambda^*$ bestimmt. Diese besondere Aufzeichnungswellenlänge $\lambda^*$ legt dann entsprechend der Beziehung

$$\lambda^* = g + Max(A_1, A_2)$$ die Größen der Spaltweite g und der Polausdehnung $A_1$ bzw. $A_2$ fest.

Gemäß einem konkreten Ausführungsbeispiel eines erfindungs gemäßen Dünnfilm-Magnetkopfes mit einem Aufbau entsprechend Figur 1 sind die folgenden Abmessungen vorgesehen:

$A_1 = 1 \ \mu m,$

$A_2 = 0,6 \ \mu m,$

$g = 0,2 \ \mu m.$

Für $D_{min}$ ergibt sich dann ein Wert von 43 kfci.

## Ansprüche

1. Dünnfilm-Magnetkopf, der
- über ein senkrecht zu magnetisierendes Aufzeichnungsmedium zu führen ist, in das längs einer Spur Flußwechsel mit vorbestimmter Aufzeichnungswellenlänge und Flußwechseldichte einzuschreiben sind,
und
- einen den magnetischen Fluß führenden, ringkopfähnlichen Leitkörper mit zwei Magnetschenkeln enthält, die

a) dem Aufzeichnungsmedium zugewandte Magnetpole ausbilden, welche in relativer Bewegungsrichtung des Magnetkopfes bezüglich des Aufzeichnungsmediums gesehen hintereinander, durch einen Spalt vorbestimmter Weite beabstandet angeordnet sind und vorbestimmte Ausdehnungen in Bewegungsrichtung haben,
sowie

b) außerhalb des Bereiches der Magnetpole einen Zwischenraum begrenzen, durch den sich die Windungen mindestens einer Schreib- und/oder Lesespulenwicklung erstrecken,
**dadurch gekennzeichnet,** daß folgende Beziehung zumindest annähernd erfüllt ist:

$$\lambda^* = g + Max(A_1, A_2),$$

wobei

$\lambda^*$ die Aufzeichnungswellenlänge ($\lambda$) ist, die sich für den Wert $D_p$ der Flußwechseldichte (D) ergibt, bei dem die Lesespannung (V) an der Lesespulenwicklung (17) maximal ist,

g die Weite des Spaltes (12) ist

und

$Max(A_1, A_2)$ der größere Wert der beiden Ausdehnungen ($A_1$, $A_2$) der Magnetpole (P1, P2) ist.

2. Magnetkopf nach Anspruch 1, **dadurch gekennzeichnet,** daß die Weite (g) des Spaltes (12) kleiner als 1 $\mu m$, vorzugsweise kleiner als 0,3 $\mu m$, ist.

3. Magnetkopf nach Anspruch 1 oder 2, **dadurch gekennzeichnet,** daß die Ausdehnung ($A_1$) des in Bewegungsrichtung (v) gesehen vorlaufenden Magnetpoles (P1) zwischen 0,3 $\mu m$ und 3 $\mu m$ liegt.

4. Magnetkopf nach einem der Ansprüche 1 bis 3, **dadurch gekennzeichnet,** daß die Ausdehnung ($A_2$) des in Bewegungsrichtung (v) gesehen nachlaufenden Magnetpoles (P2) zwischen 0,3 $\mu m$ und 3 $\mu m$ liegt.

5. Magnetkopf nach den Ansprüchen 3 und 4, **dadurch gekennzeichnet,** daß die Ausdehnungen ($A_1$, $A_2$) der Magnetpole (P1, P2) verschieden groß sind.

87 P 3480

FIG 1

V

D$_p$

FIG 2

D

B

B$_s$

B$_t$

D$_{min}$

FIG 3

D

V

FIG 4

D

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE TRANSACTIONS ON MAGNETICS, Band MAG-11, Nr. 6, November 1975, Seiten 1692-1696, New York, US; D.A. LINDHOLM: "Dependence of reproducing gap null on head geometry" * Seite 1692, linke Spalte, Absätze 2,3; Seite 1694, rechte Spalte, Absatz 5; Seite 1695, rechte Spalte, Absatz 1 - letzter Absatz; Seite 1696, linke Spalte, Absatz 3; Figuren 6,7 * --- | 1 | G 11 B 5/31 G 11 B 5/09 |
| A | IEEE TRANSACTIONS ON MAGNETICS, Band MAG-19, Nr. 5, September 1983, Seiten 1611-1613, IEEE, New York, US; N.H. YEH: "Anomalous wavelength response of a thin film head from double-layer perpendicular media" * Insgesamt * --- | 1 | |
| A | IEEE TRANSACTIONS ON MAGNETICS, Band MAG-21, Nr. 5, September 1985, IEEE, New York, US; N.H. YEH: "Review of head-media coupling in magnetic recording" * Seite 1341, linke Spalte, Absätze 2,3 * --- | 1 | RECHERCHIERTE SACHGEBIETE (Int. Cl.4) G 11 B |
| A | US-A-4 575 777 (HOSOKAWA) * Spalte 8, Zeile 67 - Spalte 10, Zeile 7; Figuren 14A,15A * --- | 1,3,4 | |
| A | DE-C- 896 122 (KLANGFILM GmbH) * Seite 2, Zeile 82 - Seite 3, Zeile 107; Figuren 10,11,12,13 * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 20-03-1989 | FUX J. |

**Europäisches Patentamt**

# EUROPÄISCHER RECHERCHENBERICHT

Nummer der Anmeldung

EP 88 11 9830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 72 (P-265)[1509], 4. April 1984, Seite 107 P 265; & JP-A-58 218 021 (AKIO OOTSUBO) 19-12-1983 * Zusammenfassung * --- | 1 | |
| A | IEEE TRANSACTIONS ON MAGNETICS, Band MAG-16, Nr. 1, Januar 1980, Seiten 114-119, IEEE, New York, US; A. VAN HERK et al.: "Measurement of side-write, -erase, and -read behavior of conventional narrow track disk heads" --- | | |
| A | US-A-4 277 809 (FISHER) --- | | |
| A | US-A-4 580 178 (WUORI et al.) --- | | |
| A | US-A-2 596 912 (NYGAARD) ----- | | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| DEN HAAG | 20-03-1989 | FUX J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument